(19) Europäisches Patentamt

European Patent Office

Office européen des brevets

(11) Veröffentlichungsnummer: **0 236 995 B1**

(12) **EUROPÄISCHE PATENTSCHRIFT**

(45) Veröffentlichungstag der Patentschrift: **24.06.92**

(21) Anmeldenummer: **87103286.8**

(22) Anmeldetag: **07.03.87**

(51) Int. Cl.5: **C08G 65/20**, C08G 65/30

(54) **Verfahren zur Einengung der Molekulargewichtsverteilung von Polytetrahydrofuran und von Copolymerisaten aus Tetrahydrofuran und Alkylenoxiden.**

(30) Priorität: **11.03.86 DE 3607946**

(43) Veröffentlichungstag der Anmeldung:
**16.09.87 Patentblatt 87/38**

(45) Bekanntmachung des Hinweises auf die
Patenterteilung:
**24.06.92 Patentblatt 92/26**

(84) Benannte Vertragsstaaten:
**BE DE FR GB IT LU NL**

(56) Entgegenhaltungen:
**EP-A- 0 202 487**
**DE-A- 1 720 933**
**US-A- 4 251 654**
**US-A- 4 500 705**

**PATENT ABSTRACTS OF JAPAN, Band 9, Nr. 254 (C-308)(1977), 11. Oktober 1985; & JP - A - 60 108 424 (ASAHI KASEI KOGYO K.K.) 13.06.1985**

**PATENT ABSTRACTS OF JAPAN, Band 9, Nr. 171 (C-2919)(1894) 16. Juli 1985; & JP - A - 60 42421 (MITSUBISHI KASEI KOGYO K.K.) 06.03.1985**

(73) Patentinhaber: **BASF Aktiengesellschaft**
**Carl-Bosch-Strasse 38**
**W-6700 Ludwigshafen(DE)**

(72) Erfinder: **Mueller, Herbert, Dr.**
**Carostrasse 53**
**W-6710 Frankenthal(DE)**

## Beschreibung

Diese Erfindung betrifft ein Verfahren zur Einengung der Molekulargewichtsverteilung von Polytetrahydrofuran und von Copolymerisaten aus Tetrahydrofuran und Alkylenoxid durch Behandlung des Polymerisates mit einem Lösungsmittelgemisch aus einem Alkohol, einem Kohlenwasserstoff und Wasser.

Polytetramethylen-ether-glykol, auch Polytetrahydrofuran (PTHF) genannt, ist ein wichtiges Zwischenprodukt. Es wird häufig bei der Herstellung von Polyurethanen und Polyestern verwendet, um diese mit Weichsegmenten auszustatten. Die Polymerisation von Tetrahydrofuran (THF) zu PTHF wird z.B. in Angewandte Chemie, 72, 927 (1960) beschrieben. Zum Stand der Technik sei noch auf die Monographie "Polytetrahydrofuran" von P. Dreyfuss, Gordon and Breach, Science Publishers, New York, London, Paris 1982 verwiesen.

PTHF wird durch Polymerisation von THF mit Hilfe kationischer Katalysatoren erhalten. Es setzt sich wie alle polymeren Verbindungen aus Molekülen von unterschiedlichem Polymerisationsgrad zusammen. Die Molekulargewichtsverteilung kann je nach dem gewählten Polymerisationsverfahren mehr oder minder breit sein. Häufig findet man eine sogenannte Gauß'sche Verteilung. Die Molekulargewichtsverteilung des PTHF's ist normalerweise ziemlich breit und weicht häufig von der Gauß'schen Verteilung in sofern ab, als der Anteil der Fraktionen mit höherem Molekulargewicht geringer ist als derjenige mit niedrigem Molekulargewicht oder umgekehrt. Man definiert die Einheitlichkeit der Molekulargewichtsverteilung als das Verhältnis von Gewichtsmittelmolekulargewicht ($M_w$) zu Zahlenmittelmolekulargewicht ($M_n$). Man erhält das Zahlenmittelmolekulargewicht, indem das Gewicht einer Probe durch die Anzahl der Moleküle, aus der sie sich zusammensetzt, geteilt wird. Das Gewichtsmittelmolekulargewicht dagegen ist die Summe der Produkte gebildet aus Fraktionsgewichten und Molekulargewichten dividiert durch die Summe der Gewichte der Einzelfraktionen. Die Molekulargewichtsverteilung wird also durch den Quotienten $M_w/M_n$ definiert, den man auch als Heterogenitätsfaktor bezeichnet. Man ermittelt ihn z.B. durch Molekulargewichtsbestimmungen nach der Lichtstreuungsmethode und der Osmometrie oder aus den Verteilungskurven, die man Hilfe der Gel-Permeations-Chromtographie erhält. Aus diesen gemessenen Verteilungskurven lassen sich die Werte $M_w$ und $M_n$ bestimmen. Mit großer Genauigkeit erhält man den Wert für $M_n$ auch durch Endgruppenbestimmung des PTHF. Der Heterogenitätsfaktor entspricht angenähert der Molekulargewichtsverteilung $M_{vis}/M_n$, wie sie z.B. in der DE-PS 24 53 114 beschrieben wird. $M_{vis}$ wird als Kompressionsviskosität bezeichnet. Sie ist ein empirischer Wert, der sich aus der Beziehung log $M_{vis}$ = 0,493 log Viskosität (bei 40°C in Poise) + 3,0646 ergibt. Dieser Zusammenhang erklärt sich dadurch, daß bei Polymeren mit breiter Molekulargewichtsverteilung die Viskosität exponentiell mit dem Molekulargewicht ansteigt. So ist es bekannt, daß die Viskosität breit verteilter Polymerer höher ist als solcher mit enger Molekulargewichtsverteilung derselben Struktur und demselben Zahlenmittelmolekulargewicht. $M_{vis}/M_n$ ist im allgemeinen 20 bis 30 % kleiner als $M_w/M_n$. Die Molekulargewichtsverteilung des PTHF hat einen erheblichen Einfluß auf das Eigenschaftsniveau der daraus hergestellten Polyurethanpolymeren oder Polyesterpolymeren. Ganz allgemein gilt, daß das mechanische Eigenschaftsniveau der Fertigprodukte, insbesondere von Konstruktionswerkstoffen, die aus PTHF hergestellt werden, umso höher liegt, je monodisperser das eingesetzte PTHF hinsichtlich der Molekülgrößen ist. Umgekehrt gilt, daß man Endprodukte mit einem geringeren Eigenschaftsniveau erhält, wenn man ein PTHF mit breiter Molekulargewichtsverteilung verwendet.

Da man bei der Herstellung von PTHF Polymere mit einer verhältnismäßig breiten Molekulargewichtsverteilung erhält, besteht das Bedürfnis, entweder ein Polymerisationsverfahren zu entwickeln, das Polymere mit einer engen Molekulargewichtsverteilung liefert oder aber eine Möglichkeit zu finden, PTHF durch eine Nachbehandlung in der Molekulargewichtsverteilung einzuengen.

Nach den Angaben der CA-PS 800 659 soll ein PTHF mit engerer Molekulargewichtsverteilung dadurch erhalten werden, daß man die Polymerisation von THF vor Erreichung des Gleichgewichtes abbricht. Ein solches Verfahren ist nur schwer zu reproduzieren, da je nach dem Zeitpunkt des Polymerisationsabbruches Produkte mit verschieden hohem mittleren Molekulargewicht entstehen. Die durch diese Maßnahme erzielbare Einengung der Molekulargewichtsverteilung ist zudem gering. Der erzielte Umsatz des Monomeren liegt außerdem niedriger als bei der Gleichgewichtsreaktion, wodurch sich das Verfahren verteuert.

In der DE-PS 24 53 114 wird ein Verfahren zur Herstellung eines PTHF's mit enger Molekulargewichtsverteilung beschrieben, bei dem man ein PTHF-Ausgangsmaterial bei Temperaturen von 120 bis 150°C in Gegenwart eines vernetzten Ionenaustauscharzes in der Säureform partiell zu Tetrahydrofuran depolymerisiert. Man erhält nach diesem Verfahren zwar befriedigende Ergebnisse; nachteilig ist aber, daß vernetzte Ionenaustauschharze teuer sind und nur eine begrenzte Stabilität gegen das Substrat bei erhöhter Temperatur aufweisen. Das Verfahren kann deshalb nur in einem sehr engen Temperaturbereich zwischen 120 und 135° C ausgeübt werden. Man trägt dabei stets das Risiko, daß das eingesetzte PTHF durch aufgelöste Ionenaustauschharzbestandteile verunreinigt wird oder Verfärbungen des Polymerisates auftreten. Selbst bei den tiefen Temperaturen von 120 bis 135° C läßt es sich nicht völlig vermeiden, daß die Ionenaustauschharze stark quellen und geringe Mengen davon als Verunreinigungen in das PTHF gelangen. Die Temperaturbegrenzung schränkt die Depolymerisationsgeschwindigkeit ein und bedingt eine Verteuerung des Verfahrens. Nach dem Verfahren werden außerdem vor allem nur kleine Moleküle abgebaut. Die schwereren Moleküle bleiben intakt, da sie nicht oder nur langsam an die sauren Zentren des Katalysators gelangen können. Nach diesem Verfahren können deshalb nur Polymerisate mit mittleren Molekulargewichten zwischen 600 und 2000 der Einengung der Molekulargewichtsverteilung unterworfen werden.

Neuerdings ist mit der US-PS 4 510 333 ein Verfahren zur Herstellung von PTHF mit enger Molekulargewichtsverteilung bekannt geworden, bei dem man in einer ersten Stufe ein Gemisch aus THF und einem ionischen Initiator erwärmt, um ein Maximum an Oxoniumionen zu erzeugen, und dann in einer zweiten Stufe bei einer tieferen Temperatur die eigentliche Polymerisation bei erneuter THF-Zugabe bewirkt. Ein solches Verfahren ist apparativ und energetisch aufwendig und infolgedessen sehr kostspielig. Die kontinuierliche Polymerisation nach dieser zweistufigen Arbeitsweise ist außerdem verfahrenstechnisch nur unter Schwierigkeiten zu realisieren. Nach der in der JP-OS 85/42421 beschriebenen Methode wird PTHF mit breiter Molekulargewichtsverteilung mit einem Gemisch aus Wasser und einem Lösungsmittel mit schlechtem Lösungsvermögen für PTHF behandelt, und das Behandlungsgemisch in zwei Fraktionen mit engerer Molekulargewichtsverteilung aufgetrennt. Dieses Verfahren versagt bei einem PTHF mit Molekulargewichten größer als 1500 und auch bei Copolymeren aus THF und Alkylenoxiden. Außerdem reichern sich die im Polymerisat vorhandenen oligomeren cyclischen Ether in der Fraktion mit der höheren Molmasse an.

Es bestand somit die Aufgabe, ein Verfahren zu finden, das es gestattet, aus einem PTHF mit breiter Molekulargewichtsverteilung bei kurzen Behandlungszeiten ein PTHF mit enger Molekulargewichtsverteilung herzustellen. Dabei konnte weder eine Verunreinigung des Verfahrensproduktes durch Katalysatorbestandteile in Kauf genommen werden, noch sollte eine Einschränkung hinsichtlich der Molekülgröße des zu behandelnden Polymerisates gegeben sein. Anzustreben war auch eine problemlose Polymerisation des Tetrahydrofurans, bei der auf die Einhaltung von Temperaturstufen verzichtet werden konnte. Das Verfahren sollte auch die Möglichkeit bieten, aus gegebenen Polymerisaten nicht nur solche zu gewinnen, deren mittlere Molekulargewichte höher als die der Einsatzprodukte sind, sondern auch solche, deren mittlere Molekulargewichte geringer als die der Ausgangspolymerisate sind. Schließlich sollte das neue Verfahren auch auf Polymerisate des THF mit Molekulargewichten über 1500 und Copolymerisate aus THF und Alkylenoxiden anwendbar sein, wobei es auch möglich sein sollte, die in den Polymerisaten stets vorhandenen oligomeren cyclischen Ether abzutrennen.

Das erfindungsgemäße Verfahren der Einengung der Molekulargewichtsverteilung von Polytetrahydrofuran und von Copolymerisaten aus Tetrahydrofuran und Alkylenoxiden, durch das diese Aufgabe gelöst wird, ist dadurch gekennzeichnet, daß man die Polymerisate mit einem Lösungsmittelgemisch aus (a) einem Alkanol mit 1 bis 4 C-Atomen, (b) einem Kohlenwasserstoff mit 4 bis 12 C-Atomen und (c) Wasser, wobei der Gehalt der Einzelkomponenten a, b und c im Gemisch zwischen den Grenzen 8 bis 60 Gew.% liegt, vermischt, danach die sich bildenden Phasen voneinander trennt, und das Polymerisat mit engerer Molekulargewichtsverteilung aus den beiden unteren Phasen isoliert. Im Polymerisat vorhandene cyclische oligomere Ether werden in der leichten Kohlenwasserstoffphase angereichert.

Nach dem Verfahren der Erfindung verwendet man als Ausgangsstoff ein nach an sich bekannten Verfahren erhältliches PTHF. PTHF wird durch Polymerisation von THF mit Hilfe kationischer Katalysatoren erhalten. Dieses hat im allgemeinen ein Zahlenmittelmolekulargewicht von 500 bis 3000 mit Heterogenitätsfaktoren von 1,5 bis 4 und eine Viskosität, die zwischen 1 und 70 Poise (bei 40° C) liegt. Man nimmt die erfindungsgemäße Einengung der Molekulargewichtsverteilung bei diesen Ausgangsstoffen im allgemeinen so vor, daß man für den oben angegebenen Molekulargewichtsbereich ein PTHF mit einer Molekulargewichtsverteilung ($M_w/M_n$) zwischen den Werten 1,2 bis 2,5 erhält. Der kleinere Wert ist den Produkten mit niedrigem Molekulargewicht, der größere Wert den Produkten mit hohem Molekulargewicht bis zu 3000 zuzuordnen.

Nach dem erfindungsgemäßen Verfahren lassen sich auch durch Copolymerisation von THF mit Alkylenoxiden erhältliche Copolymerisate behandeln, die dadurch in Polymere mit enger Molekulargewichtsverteilung aufgespalten werden. Insbesondere werden Copolymerisate der genannten Art bevorzugt, deren Gehalt an oligomeren cyclischen Ethern unter 7 Gew.% liegt. Solche Copolymere erhält man z.B. nach Verfahren, wie sie in der US-PS 4 500 705 genannt sind. Sie enthalten z.B. 60 bis 80 Gew.% THF und 20 bis 40 Gew.% Ethylenoxid oder z.B. Propylenoxid.

Nach dem Verfahren der Erfindung nimmt man die Einengung der Molekulargewichtsverteilung von PTHF und den genannten Copolymerisaten durch Behandlung mit einem Lösungsmittelgemisch aus (a) einem Alkanol mit 1 bis 4 C-Atomen, (b) einem Kohlenwasserstoff mit 4 bis 12 C-Atomen und (c) Wasser vor. Der Gehalt der Komponenten a, b und c in dem Lösungsgemisch liegt dabei zwischen den Grenzwerten 8 bis 60, vorzugsweise 12 bis 50, insbesondere 15 bis 40 Gew.%. Die Lösungsgemische der genannten Art sind zweiphasige Gemische.

Als Alkanole mit 1 bis 4 C-Atomen werden zweckmäßigerweise Methanol oder Ethanol verwendet. Als Kohlenwasserstoffe mit 4 bis 12, vorzugsweise 5 bis 8 C-Atomen kommen aromatische oder gesättigte oder ungesättigte aliphatische oder cycloaliphatische Kohlenwasserstoffe in Betracht. Bevorzugt werden cycloaliphatische Kohlenwasserstoffe oder deren Mischungen mit aromatischen oder aliphatischen Kohlenwasserstoffen. Zweckmäßigerweise verwendet man die gut zugänglichen Kohlenwasserstoffen, wie n-Heptan, n-Octan, Cyclopentan, Cyclohexan, Methylcyclohexan oder Cyclooctan, von denen Cyclohexan und Methylcyclohexan bevorzugt sind. Die Verwendung von Kohlenwasserstoffen mit einer C-Zahl <5 ist weniger vorteilhaft, da dann bei sehr tiefen Temperaturen oder unter Druck gearbeitet werden müßte.

Man verfährt z.B. so, daß man die polymeren Ausgangsstoffe mit dem Lösungsmittelgemisch intensiv vermischt. Man wendet dabei bevorzugt die 2 bis 6fache Menge an Lösungsmittelgemisch, bezogen auf den polymeren Ausgangsstoff an.

Nach einer zweckmäßigen Arbeitsweise geht man zunächst von einem Lösungsmittelgemisch aus, das die Komponenten a, b und c im Gewichtsverhältnis von etwa 1:1:1 enthält. Da das gewählte Mischungsverhältnis im Lösungsmittelgemisch sowohl den Grad der Molekulargewichtsverteilungseinengung als auch die gewichtsmäßige Verteilung der beiden Molekulargewichtsfraktionen in den beiden unteren Phasen beeinflußt, und auch der verwendete Kohlenwasserstoff bzw. Alkohol von Einfluß ist auf die Auftrennung des eingesetzten Polymerisates ist, empfiehlt es sich, durch einige wenige Experimente die für das einzelne Polymere günstigsten Lösungsmittelgemische zu bestimmen, z.B. dadurch, daß man die Menge an Alkohol oder Wasser im Lösungsmittelgemisch verdoppelt oder halbiert, bis man die gewünschte Verteilung erhält. Die Variation der Kohlenwasserstoffmenge hat meist eine geringere Wirkung. Dieser Anteil soll bevorzugt etwa so hoch gewählt werden, daß er zwischen 10 bis 100 Gew.%, bezogen auf das zu behandelnde Ausgangspolymerisat, ausmacht.

Beim Vermischen wählt man z.B. Temperaturen von 0 bis 80, vorzugsweise von 15 bis 40°C. Dabei empfiehlt es sich, bei Temperaturen zu arbeiten, bei denen das verwendete Lösungsmittelgemisch einen vergleichsweise geringen Dampfdruck aufweist. Wirkungen, die durch die Temperatur auf die Verteilung ausgeübt werden, können in den meisten Fällen durch die Wahl des Mischungsverhältnisses der drei Lösungsmittelgemischkomponenten ausgeglichen werden. Die erforderliche gute Phasendurchmischung kann mit allen gebräuchlichen Techniken wie Rühren, Schütteln oder durch Verwendung eines Treibstrahles erfolgen. Man trennt die drei Phasen z.B. durch einfaches Ablassen und Beobachten der Phasengrenzen oder mit Hilfe von Zentrifugalmaschinen. Die erhaltenen drei Phasen werden nach technisch üblichen Methoden, z.B. durch Destillation unter Normaldruck oder im Vakuum von den anhaftenden Lösungsmitteln befreit. Man erhält dabei die Polymerisate mit engerer Molekulargewichtsverteilung aus den beiden unteren Phasen. Beim Einsatz von PTHF oder Copolymeren aus THF und Alkylenoxiden isoliert man aus der obersten Phase oligomere cyclische Ether, aus der mittleren Phase die höhere Molekulargewichtsfraktion des PTHF's und aus der unteren Phase die niedere Molekulargewichtsfraktion des PTHF's. Die abgedampften Lösungsmittel können nach Kondensation erneut für das Verfahren herangezogen werden.

Nach dem erfindungsgemäßen Verfahren gelingt es, Polymerisate mit breiter Molekulargewichtsverteilung und von mittlerer Molekülgröße in zwei Fraktionen zu zerlegen, die beide sehr eng verteilt sind und sich z.B. in der mittleren Molekülgröße wie 1:2 verhalten. In der obersten Phase, die durchweg weniger als 5 Gew.% des eingesetzten PTHF enthält, befinden sich oligomere cyclische Ether neben ganz geringen Mengen PTHF. Die Abtrennung der oligomeren cyclischen Ether ist ein sehr wünschenswerter Effekt, da diese Stoffe Neutralbestandteile in Bezug auf die weitere Verwendung des Polymerisates darstellen.

Die erreichte Einengung der Molekulargewichtsverteilung und die Auftrennung des ursprünglichen Polymerisates in zwei durch das Molekulargewicht deutlich unterschiedene Fraktionen war unerwartet und überraschend. In den US-PS 4 500 705 und 4 251 654 wird die extraktive Behandlung von Copolymeren aus THF und Ethylenoxid mit Kohlenwasserstoffen bzw. Wasser beschrieben. Danach gelangen die oligomeren cyclischen Ether in die Kohlenwasserstoffphase bzw. in das Wasser. Bei dieser Kenntnis konnte nicht vorausgesehen werden, daß sich bei der erfindungsgemäßen Arbeitsweise mit einer Dreierkombination der Lösungsmittel die oligomeren cyclischen Ether in die oberste Phase, die im wesentlichen aus Kohlenwasserstoff besteht, begeben. Es mußte mit der Möglichkeit gerechnet werden, daß sich die oligomeren cyclischen Ether ebenfalls in der untersten schwereren Phase anreichern. Die vorteilhafte Auftrennung der Polymerisate in zwei wertvolle Molekulargewichtsfraktionen ohne Verunreinigungen durch oligomer cyclische Ether wäre in diesem Fall nicht erreichbar gewesen.

Die in den Beispielen genannten Teile sind Gewichtsteile, sie verhalten sich zu Volumenteilen wie Kilogramm zu Litern.

## Beispiel 1

Ein zweiphasiges Lösungsmittelgemisch aus einem Teil Cyclohexan, einem Teil Methanol und einem Teil Wasser wird mit einem Teil PTHF 5 Minuten intensiv gemischt. Das verwendete PTHF hat ein aus der Hydroxylzahl bestimmtes mittleres Molekulargewicht von 630 und einen Heterogenitätsfaktor $M_w/M_n$ = 2. Aus dem Gemisch separieren in kurzer Zeit (weniger als 10 Minuten) drei klare Phasen. Das Gewichtsverhältnis zwischen der oberen, der mittleren und der unteren Phase beträgt etwa 1:1,8:3,6. Durch separates Eindampfen der voneinander abgetrennten Phasen bei Normaldruck und im Vakuum bis 140°C werden die Phasen in Lösungsmittel und PTHF getrennt. Aus der oberen Phase gewinnt man 99,9 %iges Cyclohexan und 1,5 Gew.% des eingesetzten PTHF als Eindampfrückstand. Der Rückstand ist flüssig und besteht im wesentlichen aus oligomeren cyclische Ethern. Aus der mittleren Phase gewinnt man ein heterogenes Lösungsmittelgemisch, in dem Cyclohexan, Wasser und Methanol im Gewichtsverhältnis 11:2:1 enthalten sind. 40 Gew.% des eingesetzten PTHF erhält man als Rückstand. Dieses PTHF hat ein Molekulargewicht von 1145. Der Heterogenitätsfaktor $M_w/M_n$ beträgt 1,4. Die Viskosität bei 40°C beträgt 2,8 Poise.

Auf die beschriebene Art wird auch die untere Phase aufgearbeitet. Als Lösungsmittelgemisch erhält man ein Gemisch, das sich aus etwa 49 % Methanol und 51 % Wasser zusammensetzt. 58,5 % des eingesetzten PTHF erhält man als Eindampfrückstand. Das Molekulargewicht beträgt 360 und der Heterogenitätsfaktor 1,4.

Im wesentlichen dasselbe Ergebnis erzielt man, wenn man für die Molekulargewichtsfraktionierung ein Lösungsmittelgemisch verwendet, das aus einem Teil Methylcyclohexan, einem Teil Methanol und einem Teil Wasser zusammengesetzt ist.

Verwendet man ein Lösungsmittelgemisch, das aus einem Teil Cyclohexan, einem Teil Ethanol und einem Teil Wasser zusammengesetzt ist, so werden 3 Gew.% des eingesetzten PTHF in der oberen, 43 Gew.% in der mittleren und 54 Gew.% in der unteren Phase gefunden. Das Molekulargewicht des PTHF der mittleren Phase liegt bei 1105. Es hat einen Heterogenitätsfaktor $M_w/M_n$ = 1,5.

## Beispiel 2 bis 7

Bei einer Extraktionstemperatur von 25°C wird ein PTHF, das durch kationische Polymerisation an einem Montmorillonit-Katalysator in Gegenwart von Essigsäureanhydrid und nachfolgender Verseifung hergestellt wurde, mit unterschiedlichen Lösungsmittelgemischen aus Cyclohexan, Methanol und Wasser der Molekülgrößenfraktionierung unterworfen. Das verwendete PTHF hatte ein aus den Endgruppen bestimmtes Molekulargewicht von 750 und einen Heterogenitätsfaktor von 1,9. Die erhaltenen Ergebnisse sind in der folgenden Tabelle enthalten und zeigen sie in Abhängigkeit von der Zusammensetzung des Lösungsmittelgemisches.

## Tabelle

| Bei- spiel | Lösungsmittelgemisch | | | | PTHF-Gehalt und Mol.Gewicht (MM) in den Phasen | | | | | | $M_w/M_n$ d. mittl. Phase |
|---|---|---|---|---|---|---|---|---|---|---|---|
| | PTHF Gew.% | Cyclo- hexan Gew.% | CH₃OH Gew.% | H₂O Gew.% | Obere Phase Gew.% | MM | mittlere Phase Gew.% | MM | untere Phase Gew.% | MM | |
| 2 | 20 | 20 | 40 | 20 | 3 | – | 30 | 1608 | 67 | 500 | 1,4 |
| 3 | 20 | 40 | 20 | 20 | 3,5 | – | 50,5 | 1260 | 46,5 | 310 | 1,5 |
| 4 | 25 | 25 | 25 | 25 | 2 | – | 52 | 1220 | 46 | 320 | 1,5 |
| 5 | 27 | 27 | 20 | 20 | 2 | – | 68 | 1050 | 30 | 330 | 1,4 |
| 6 | 28 | 28 | 17 | 17 | 2 | – | 71 | 1007 | 27 | 290 | 1,6 |
| 7 | 31 | 31 | 31 | 7 | 1,5 | – | 21,5 | 1400 | 77 | 680 | 1,8 |

## Beispiel 8

Ein zweiphasiges Lösungsmittelgemisch aus 2,7 Teilen Cyclohexan, 1 Teil Methanol und 1,3 Teilen Wasser wird mit 1,3 Teilen eines THF/EthylenoxidCopolymerisates (26 Gew.% Ethylenoxid) bei 25°C vermischt. Das Copolymerisat hatte ein aus der Hydroxylzahl von 82 mg KOH/g berechnetes Molekulargewicht von 1368. Der Heterogenitätsfaktor lag bei $M_w/M_n$ = 1,9. Nach dem Vermischen bilden sich drei Phasen im Gewichtsverhältnis:

Oben:Mitte:Unten = 1:7:6. Sie werden wie im Beispiel 1 beschrieben aufgearbeitet. Die obere Phase enthält 0,1 % Wasser, 1 % Methanol, 92 % Cyclohexan und 7 % Copolymerisat. Die Hydroxylzahl von 13 mg KOH/g beweist, daß es sich um ein oligomeres cyclisches Ether-Copolymere handelt. Die mittlere Phase besteht zu 4 % aus Wasser, 5 % aus Methanol, 40 % aus Cyclohexan und 51 % aus einem Copolymerisat vom Molekulargewicht 1900 und dem Heterogenitätsfaktor 1,6. Die untere Phase setzt sich aus 27 % Wasser, 23 % Methanol, 0,5 % Cyclohexan und 49,5 % Copolymerisat vom Molekulargewicht 800 und dem Heterogenitätsfaktor $M_w/M_n$ = 1,3 zusammen.

## Beispiel 9

Eine Mischung aus 18,18 Gew.% Polytetrahydrofuran mit dem Molekulargewicht 2.000 und einem Heterogenitätsfaktor $M_w/M_n$ = 2,3, 18,18 Gew.% n-Heptan, 18,18 Gew.% Wasser und 45,45 Gew.% Methanol wird intensiv gemischt. Nach dem Vermischen trennen sich im Ruhezustand 3 Phasen ab. Diese werden voneinander getrennt und zunächst bei Normaldruck, dann im Vakuum von den anhaftenden Lösungsmitteln, Wasser, Methanol und Heptan getrennt. Die obere Phase enthält 0,80 Gew.%, die mittlere Phase 26,84 Gew.% und die untere Phase 72,36 Gew.% des Polymerisates, das der extraktiven Verteilung in der Lösungsmittelmischung unterworfen worden war. Das Polymerisat in der mittleren Phase besitzt ein Molekulargewicht von 976 und einen Heterogenitätsfaktor $M_w/M_n$ = 1,6. Das Polymerisat der unteren Phase hat das Molekulargewicht 2,992 und einen Heterogenitätsfaktor $M_w/M_n$ von 1,8.

## Beispiel 10 (kontinuierliche Arbeitsweise)

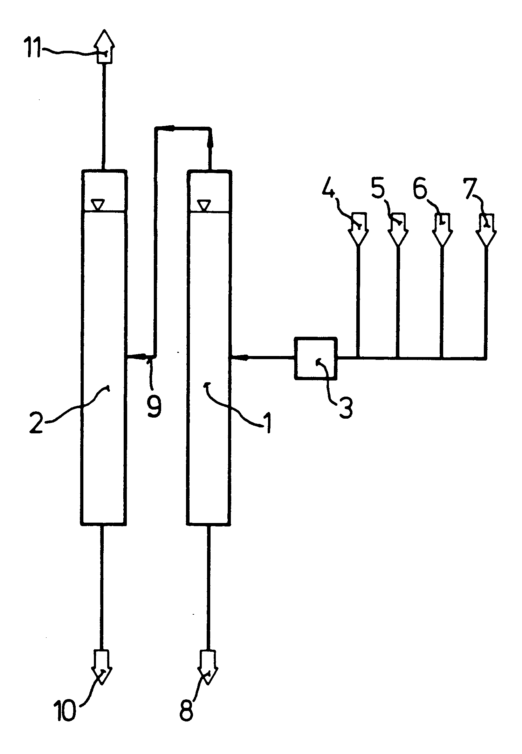

Wie aus der Zeichnung ersichtlich, werden 2 hintereinandergeschaltete Trennsäulen (1) und (2) mit einer in einem Mischer (3) homogenisierten Zulaufmischung aus einem Teil Wasser, 1,8 Teilen Methanol, 0,7 Teilen n-Heptan und einem Teil Polytetrahydrofuran mit dem Molekulargewicht 2000 und dem Heterogenitätsfaktor $M_w/M_n$ = 2,5 beschickt. Die Ausgangsstoffe gelangen über die Zuleitungen (4), (5), (6) und (7) in den Mischer (3). Das Gemisch leitet man kontinuierlich in die erste Trennsäule (1), die bei 40°C betrieben wird. Die Säule (1) hat ein Volumen von 1,6 Teilen, ihr Durchmesser verhält sich zur Länge wie 1 zu 40. Die zweite Trennsäule (2) ist in Form und Größe mit der ersten Säule (1) identisch. Sie wird bei 25°C betrieben. In der ersten Säule läßt man das eingeleitete homogenisierte Gemisch in 2 Phasen separieren, wobei man die Phasengrenzschicht der unteren Phase zu den beiden oberen Phasen so anordnet, daß die untere Phase 90 % des gesamten Volumens der Trennsäule (1) ausfüllt. Um das zu erreichen, zieht man aus der Säule (1) die untere Phase kontinuierlich so ab (8), daß sich die Grenzfläche zu den beiden oberen Phasen im Niveau nicht verändert. Die beiden oberen Phasen fließen kontinuierlich über Kopf der Säule (1) ab und werden über einen Zulauf, der in der Mitte (9) der Trennsäule (2) angebracht ist, in die Säule (2) geleitet. Dort wird das Gemisch in eine obere Phase und in eine untere Phase, die ursprünglich mittlere Phase, getrennt. Das Niveau der Grenzfläche zwischen beiden Phasen wird auch hier so gehalten, daß die untere Phase 90 % des gesamten Volumens der Trennsäule (2) ausmacht. Die mittlere Phase, die in der Säule (2) als untere Phase erscheint, wird auch hier niveaugeregelt kontinuierlich abgezogen (10), während die obere Phase frei überläuft (11).

Die 3 erhaltenen Phasen werden getrennt aufgearbeitet. Durch Eindampfen bei Normaldruck und im Vakuum stellt man fest, daß die obere Phase etwa 1 % des zugeführten Polytetrahydrofurans enthält. Außerdem besteht sie zu über 99 % aus n-Heptan. Die mittlere Phase enthält etwa 85 % des Polytetrahydrofurans sowie die eingesetzten Lösungsmittel Heptan (55 %), Methanol (35 %) und Wasser (10 %). Das aus der mittleren Phase isolierte Polytetrahydrofuran besitzt eine Molmasse von 2761 g/Mol und einen Heterogenitätsfaktor $M_w/M_n$ = 2,2. Die untere Phase enthält ca. 14 % des eingesetzten Polytetrahydrofurans. Sie besteht aus 35 % Wasser und 65 % Methanol. Das mittlere Molekulargewicht des Polytetrahydrofurans in dieser unteren Phase beträgt 700 g/Mol und weist einen Heterogenitätsfaktor $M_w/M_n$ von 1,5 auf.

**Patentansprüche**

1. Verfahren zur Einengung der Molekulargewichtsverteilung von Polytetrahydrofuran oder von Copolymerisaten aus Tetrahydrofuran und Alkylenoxiden, dadurch gekennzeichnet, daß man das Polymerisat mit einem Lösungsmittelgemisch aus (a) einem Alkanol mit 1 bis 4 C-Atomen, (b) einem Kohlenwasserstoff mit 4 bis 12 C-Atomen und (c) Wasser, wobei der Gehalt der Einzelkomponenten a, b und c im Gemisch zwischen den Grenzen 8 und 60 Gew.% liegt, vermischt, danach die drei sich bildenden Phasen voneinander trennt, und je eine Fraktion des Polymerisats mit engerer Molekulargewichtsverteilung aus den beiden unteren Phasen isoliert.

2. Verfahren nach Anspruch 1, dadurch gekennzeichnet, daß das Lösungsmittelgemisch als Alkanol (a) Methanol oder Ethanol enthält.

3. Verfahren nach Anspruch 1, dadurch gekennzeichnet, daß das Lösungsmittelgemisch als Komponente (b) einen cycloaliphatischen Kohlenwasserstoff mit 5 bis 8 C-Atomen enthält.

4. Verfahren nach Anspruch 3, dadurch gekennzeichnet, daß das Lösungsmittelgemisch Cyclohexan oder Methylcyclohexan enthält.

5. Verfahren nach Anspruch 1, dadurch gekennzeichnet, daß man die Vermischung bei Temperaturen von 0 bis 80°C vornimmt.

6. Verfahren nach Anspruch 1, dadurch gekennzeichnet, daß man die 2- bis 6-fache Gewichtsmenge an Lösungsmittelgemisch, bezogen auf das Polymerisat, anwendet.

**Claims**

1. A process for narrowing the molecular weight distribution of polytetrahydrofuran or of copolymers of tetrahydrofuran and alkylene oxides, wherein the polymer is mixed with a solvent mixture consisting of (a) an alkanol of 1 to 4 carbon atoms (b) a hydrocarbon of 4 to 12 carbon atoms and (c) water, the content of the individual components a, b and c in the mixture being from 8 to 60% by weight, the phases which form are separated from one another, and, in each case a fraction of the polymer having the narrower molecular weight distribution is then isolated from the two lower phases.

2. A process as claimed in claim 1, wherein the solvent mixture contains methanol or ethanol as the alkanol (a).

3. A process as claimed in claim 1, wherein the solvent mixture contains, as component (b), a cycloaliphatic hydrocarbon of 5 to 8 carbon atoms.

4. A process as claimed in claim 3, wherein the solvent mixture contains cyclohexane or methylcyclohexane.

5. A process as claimed in claim 1, wherein mixing is carried out at from 0 to 80 °C.

6. A process as claimed in claim 1, wherein the weight of solvent mixture used is from 2 to 6 times that of the polymer.

**Revendications**

1. Procédé pour resserrer la plage de distribution des poids moléculaires de polytétrahydrofuranne ou de copolymères de tétrahydrofuranne et d'oxydes d'alkylène, caractérisé en ce qu'on mélange le polymère avec un mélange de solvants comprenant (a) un alcanol à 1-4 atomes de carbone, (b) un hydrocarbure à 4-12 atomes de carbone et (c) de l'eau, la teneur du mélange en composants individuels a, b et c se situant entre les limites de 8 et de 60% en poids, après quoi les trois phases qui se forment sont séparées l'une de l'autre, et une fraction du polymère ayant une plage plus étroite de distribution des poids moléculaires est isolée chaque fois des deux phases inférieures.

2. Procédé selon la revendication 1, caractérisé en ce que le mélange de solvants contient du méthanol ou de l'éthanol en tant qu'alcanol (a).

3. Procédé selon la revendication 1, caractérisé en ce que le mélange de solvants contient, en tant que composant (b), un hydrocarbure cycloaliphatique à 5-8 atomes de carbone.

4. Procédé selon la revendication 3, caractérisé en ce que le mélange de solvants contient du cyclohexane ou du méthylcyclohexane.

5. Procédé selon la revendication 1, caractérisé en ce qu on procède au mélange à des températures de 0 à 80 °C.

6. Procédé selon la revendication 1, caractérisé en ce qu on utilise une quantité en poids de mélange de solvants comprise entre 2 et 6 fois la quantité de polymère.